# EUROPEAN PATENT APPLICATION

(11) **EP 2 892 262 A1**
(43) Date of publication of application: **08.07.2015**
(21) Application number: 13833585.6
(22) Date of filing: 27.08.2013
(51) Int. Cl.: H04W 8/26

(54) **METHOD AND SYSTEM FOR DATA SYNCHRONIZATION BETWEEN FOREGROUND AND BACKGROUND IN ENUM-DNS**

(30) Priority: 31.08.2012 CN 201210318941
(71) Applicant: ZTE Corporation, Shenzhen, Guangdong 518057 (CN)
(72) Inventor: SHENG, Mingchao, Shenzhen Guangdong 518057 (CN); WU, Limei, Shenzhen Guangdong 518057 (CN); OUYANG, Xinzhi, Shenzhen Guangdong 518057 (CN)
(74) Representative: Quinterno, Giuseppe
(86) International application number: PCT/CN2013/082399
(87) International publication number: WO 2014/032576

(57) **Abstract**

A method and system for data synchronization between a foreground and a background in an ENUM-DNS are provided. The method includes: when an account opening/cancellation instruction from an external network element is successfully executed by the background, same notifies account opening/cancellation record information to a service foreground; the service foreground stores the account opening/cancellation record information to a pre-established temporary data storage point; when a regular activation data time is reached, the background issues a changed data file to the service foreground; and, the service foreground loads the changed data file and clears all of the data in the temporary data storage point. The present invention implements real-time effectiveness of foreground and background data, and ensures the consistency of the foreground and background data under an existing mechanism; in addition, the need for frequent synchronization of data files from the background to a foreground service is obviated, and the need for frequent loading of the data files by the foreground service is obviated, therefore the performance of the system and the stability of the system are kept to the greatest extent from being affected.

## Description

### Technical Field

The present invention relates to the technical field of communications, and in particular, to a method and system for data synchronization between a foreground and a background in a Telephone Number Mapping working group-Domain Name System (ENUM-DNS) of an IP Multimedia Subsystem (IMS) network.

### Background

IMS is a brand new form of multimedia service which can satisfy the more novel and diversified multimedia service needs of current terminal customers. A user in the IMS system can be either a mobile phone user under normal conditions or a soft terminal with a specific number.

In an ENUM-DNS, in order to keep the consistency of foreground (service system) and background (maintenance system) data, the background synchronizes the added, deleted or modified data to the foreground in the form of files with serial numbers, and the foreground loads these pieces of data so that they are shown in the real service environment.

The performance of the query service at the foreground is always affected to a certain extent during each update of the foreground data, and in order to keep the consistency of the foreground and background data, expenses will be increased at both the foreground and the background. In addition, in a real service, the background data changes rather frequently, and if data synchronization between foreground and background is performed every time a piece of data is updated, the overall performance expense of the system and the stability of the system will be substantially affected.

Against the above-mentioned problem, currently the measure of regularly (every 2 minutes) activating the changed data from the background to the foreground service is generally adopted. This type of processing mode can well reduce the performance expense of the system during data update, and, at the same time, ensure the stability of the system, but it has the following problems: once a piece of data is updated at the background, it can take effect at the foreground service at a maximal interval of 2 minutes, thereby producing the data delay problem, i.e., the data updated at the background cannot take effect in real time at the foreground service.

### Summary

The embodiments of the present invention provide a method and system for data synchronization between a foreground and a background in an ENUM-DNS.

According to one aspect of the embodiments of the present invention, a method for data synchronization between a foreground and a background in an ENUM-DNS is provided, the method includes: when an account opening/cancellation instruction from an external network element is successfully executed by the background, same notifies account opening/cancellation record information to a service foreground; the service foreground stores the account opening/cancellation record information to a pre-established temporary data storage point; when a regular activation data time is reached, the background issues a changed data file to the service foreground; and the service foreground loads the changed data file and clears all of the data in the temporary data storage point.

Preferentially, the step of the background issuing a changed data file to the service foreground when a regular activation data time is reached includes: when the regular activation data time is reached, the background generates a changed data file with a serial number with data changed within the regular activation data time granularity; and the background issues the changed data file to the service foreground.

Preferentially, after the step of the service foreground storing the account opening/cancellation record information to a pre-established temporary data storage point, the method further includes: the service foreground synchronizes the account opening/cancellation record information to a backup service foreground; and the backup service foreground stores the account opening/cancellation record information to the pre-established temporary data storage point.

Preferentially, after the step of the service foreground loading the changed data file and clearing all of the data in the temporary data storage point, the method further includes: the service foreground synchronizes the changed data file to the backup service foreground; and the backup service foreground loads the changed data file and clears all of the data in the temporary data storage point thereof.

Preferentially, before the step of notifying account opening/cancellation record information to a service foreground when an account opening/cancellation instruction from an external network element is successfully executed by the background, the method further includes: the background receives and executes the account opening/cancellation instruction from the external network element; and the background returns an execution response message to the external network element.

Preferentially, the method further includes: the service foreground receives a query request sent by a client; the service foreground performs local number query in an original data storage point according to the query request; if local number query is successful, and the status identification of the temporary data storage point has data, the service foreground queries the temporary data storage point; the service foreground replaces the query result obtained from the original data storage point with the query result from the temporary data storage point; and the service foreground returns a query result response message to the client.

Preferentially, after the step of performing local number query in an original data storage point according to the query request, the method further includes: if local number query is not successful, the region to which the queried number belongs is determined; if the queried number is a local number, whether the status identification of the temporary data storage point has data is determined; otherwise, the query request is forwarded to an external region or an upper level or subordinate server.

Preferentially, before the step of notifying account opening/cancellation record information to a service foreground when an account opening/cancellation instruction from an external network element is successfully executed by the background, the method further includes: the service foreground establishes a temporary data storage point; the background regularly checks the status of the temporary data storage point established by the service foreground and sets the status identification of the storage point; and if the temporary data storage point of the service foreground is abnormal, the background feeds back a corresponding error reporting response message.

According to another aspect of the embodiments of the present invention, a system for data synchronization between a foreground and a background in an ENUM-DNS is also provided, the system includes: a background and a service foreground, wherein the background is configured to notify account opening/cancellation record information to the service foreground when an account opening/cancellation instruction from an external network element is successfully executed; and issue a changed data file to the service foreground when a regular activation data time is reached; and the service foreground is configured to store the account opening/cancellation record information to a pre-established temporary data storage point; and load the changed data file from the background and clear all of the data in the temporary data storage point.

Preferentially, the background is further configured to generate a changed data file with a serial number with data changed within a regular activation data time granularity when the regular activation data time is reached; and issue the changed data file to the service foreground.

Preferentially, the system further includes a backup service foreground; the service foreground is further configured to synchronize the account opening/cancellation record information to the backup service foreground; and synchronize the loaded changed data file to the backup service foreground; and the backup service foreground is configured to store the account opening/cancellation record information to a pre-established temporary data storage point; and load the changed data file synchronized from the service foreground and clear all of the data in the temporary data storage point thereof.

Preferentially, the background is further configured to receive and execute the account opening/cancellation instruction from the external network element; and return an execution response message to the external network element.

Preferentially, the service foreground is further configured to receive a query request sent by a client; perform local number query in an original data storage point according to the query request; query the temporary data storage point if local number query is successful and the status identification of the temporary data storage point has data; replace the query result obtained from the original data storage point with the query result from the temporary data storage point; and return a query result response message to the client.

Preferentially, the service foreground is further configured to determine the region to which the queried number belongs if local number query is not successful; determine whether the status identification of the temporary data storage point has data if the queried number is a local number; otherwise, forward the query request to an external region or an upper level or subordinate server.

Preferentially, the service foreground is further configured to establish a temporary data storage point; and the background is further configured to regularly check the status of the temporary data storage point established by the service foreground and set the status identification of the storage point; and feed back a corresponding error reporting response message if the temporary data storage point of the service foreground is abnormal.

In the method and system for data synchronization between a foreground and a background in an ENUM-DNS provided in the embodiments of the present invention: when an account opening/cancellation instruction from an external network element is successfully executed by the background, same notifies account opening/cancellation record information to a service foreground; the service foreground stores the account opening/cancellation record information to a pre-established temporary data storage point; when a regular activation data time is reached, the background issues a changed data file to the service foreground, and the service foreground loads the changed data file and then clears all of the data in the temporary data storage point, thereby implementing real-time effectiveness of foreground and background data, and ensuring the consistency of the foreground and background data under an existing mechanism; in addition, the need for frequent synchronization of data files from the background to a foreground service is obviated, and the need for frequent loading of the data files by the foreground service is obviated, therefore the performance of the system and the stability of the system are kept to the greatest extent from being affected.

### Brief Description of the Drawings

Drawings, provided for further understanding of the present invention and forming a part of the specification, are used to explain the present invention together with embodiments of the present invention rather than to limit the present invention. In the drawings:
Fig. 1 is a schematic flow chart of an embodiment of a method for data synchronization between a foreground and a background in an ENUM-DNS of the embodiments of the present invention;
Fig. 2 is a schematic flow chart of another embodiment of the method for data synchronization between a foreground and a background in an ENUM-DNS of the embodiments of the present invention;
Fig. 3 is a schematic flow chart of yet another embodiment of the method for data synchronization between a foreground and a background in an ENUM-DNS of the embodiments of the present invention; and
Fig. 4 is a structural diagram of an embodiment of a system for data synchronization between a foreground and a background in an ENUM-DNS of the embodiments of the present invention.

### Detailed Description of the Embodiments

The solution of the embodiments of the present invention includes: when an account opening/cancellation instruction from an external network element is successfully executed by the background, same notifies account opening/cancellation record information to a service foreground; the service foreground stores the account opening/cancellation record information to a pre-established temporary data storage point; when a regular activation data time is reached, the background issues a changed data file to the service foreground, and the service foreground loads the changed data file and then clears all of the data in the temporary data storage point, so as to implement real-time effectiveness of foreground and background data, and ensure the consistency of the foreground and background data and keep the stability of the system.

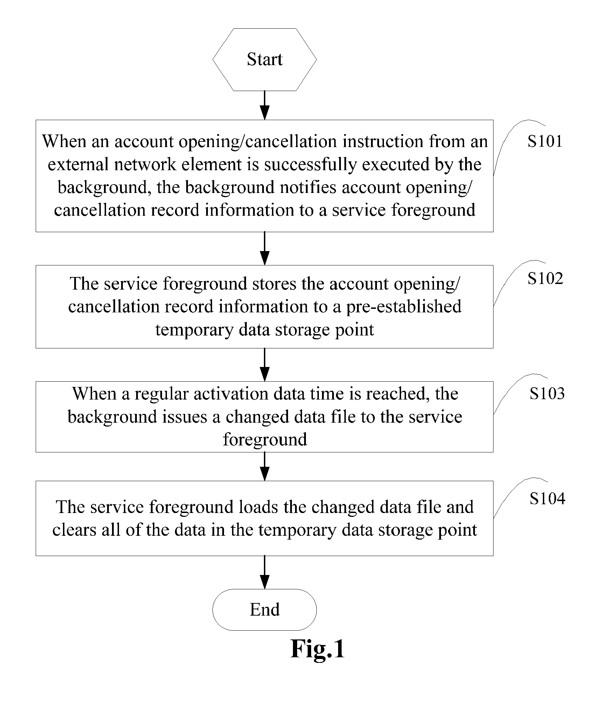

During implementation, as shown in Fig. 1, an embodiment of the present invention proposes a method for data synchronization between a foreground and a background in an ENUM-DNS, includes:
step S101, when an account opening/cancellation instruction from an external network element is successfully executed by the background, same notifies account opening/cancellation record information to a service foreground;
step S102, the service foreground stores the account opening/cancellation record information to a pre-established temporary data storage point;
this embodiment has established a new temporary data storage point in advance in the service foreground, for example: a table for storing data is established in the database and is configured to store data, and the new temporary data storage point is different from the original foreground service data storage point, thereby being able to protect the original data service from being affected.

The background will regularly check if the new temporary data storage point established by the service foreground is normal and set the status identification of the storage point, and if it is detected that the temporary data storage point of the service foreground is abnormal, the background notifies the user by way of error reporting and forbids the continual addition, deletion or modification of data in the background (such as replying the customer with an account opening or cancellation failure response, and displaying a foreground storage point anomaly alarm message in the background).

The external network element of the ENUM-DNS system issues an account opening or cancellation instruction to the background of the ENUM-DNS system and the background executes the account opening or cancellation instruction from the external network element and completes the account opening or cancellation operation.

If the background detects that the data storage point of the service foreground is abnormal, the background does not execute the account opening or cancellation instruction but replies the external network element that the account opening or cancellation operation fails and ends this account opening or cancellation flow.

After the background executes the account opening or cancellation instruction, a corresponding success or failure response message is immediately fed back to the external network element no matter whether the execution succeeds or fails. If the background fails to execute the account opening or cancellation instruction, this account opening or cancellation flow is ended.

After the background successfully executes the account opening or cancellation instruction, the background notifies the detailed record information about the execution of the account opening or cancellation instruction to a service computer of the service foreground.

After receiving the detailed account opening or cancellation record information, the service foreground stores this information into a newly established temporary data storage point, and performs the same operation in the newly established temporary data storage point. At the same time, the service foreground sets the identification bHaveData indicating whether or not the newly established temporary data storage point has data to 1;
step S103, when a regular activation data time is reached, the background issues a changed data file to the service foreground;
when the regular activation data time is reached, the background generates a changed data file with a serial number with data changed within the regular activation data time granularity; and then the background issues this changed data file to the service foreground and sends a message notifying the service foreground to load this changed data file.

Within the same time granularity when the background data is activated to the foreground, if a situation where a record indicates firstly account opening and then immediately account cancellation or firstly account cancellation and then immediately account opening occurs, the background cancels this record and does not synchronize this record to the service foreground.

Step S104, the service foreground loads the changed data file and clears all of the data in the temporary data storage point.

After receiving a message for loading the data file, the service foreground starts to load the above-mentioned changed data file, and if the loading succeeds, the service foreground clears the data in the newly established temporary data storage point, and sets the status identification bHaveData in the temporary data storage point to 0.

By means of the above-mentioned solution, this embodiment implements real-time effectiveness of foreground and background data and ensures the consistency of the foreground and background data under an existing mechanism; in addition, the need for frequent synchronization of data files from the background to a foreground service is obviated, and the need for frequent loading of the data files by the foreground service is obviated, therefore the performance of the system and the stability of the system are kept to the greatest extent from being affected.

In addition, the data related to the real-time effectiveness flow which is newly added is stored in the newly established temporary data storage point, and every time a data file is issued by the background to the foreground and the foreground successfully loads it, all of the data in the newly established temporary data storage point is cleared, thereby ensuring that if the real-time effective data is abnormal the system is able to automatically go back to normal after at most one data activation time granularity.

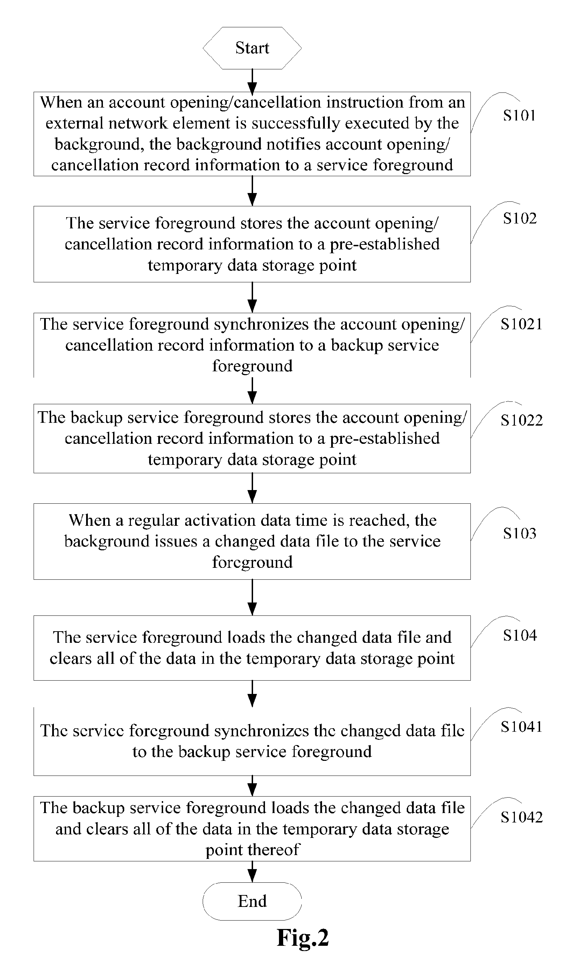

As shown in Fig. 2, another embodiment of the present invention proposes a method for data synchronization between a foreground and a background in an ENUM-DNS, and based on the above-mentioned embodiment, after the above-mentioned step S102, the method further includes:
step S1021, the service foreground synchronizes the account opening/cancellation record information to a backup service foreground;
step S1022, the backup service foreground stores the account opening/cancellation record information to a pre-established temporary data storage point.

After the above-mentioned step S104, the method further includes:
step S1041, the service foreground synchronizes the changed data file to the backup service foreground;
step S1042, the backup service foreground loads the changed data file and clears all of the data in the temporary data storage point.

This embodiment differs from the above-mentioned embodiment in that this embodiment also includes an operation against the backup service foreground.

During implementation, the backup service foreground also establishes a temporary data storage point of its own in advance, and let the background regularly check if the temporary data storage point is normal.

After the service foreground receives the detailed account opening or cancellation record information sent by the background, the service foreground will notify the backup service foreground of this detailed record information about the execution of an account opening or cancellation instruction sent by the background; and after receiving the detailed information about the account opening or cancellation instruction sent by the service foreground, the backup service foreground stores these records in the newly established temporary data storage point.

Afterwards, when the regular activation data time of the background is reached, the service foreground loads the changed data file synchronized by the background, and after the loading succeeds, clears the newly established temporary data storage point thereof, and meanwhile, the service foreground also synchronizes the changed data file to the backup service foreground; and the backup service foreground loads the changed data file synchronized by the service foreground, and after the loading succeeds, clears the newly established temporary data storage point thereof, and meanwhile, sets the status identification bHaveData in the temporary data storage point to 0.

It can be known from the above-mentioned embodiment that all the operations against the newly established temporary data storage point in this embodiment are synchronized by an ENUM-DNS server on the master node (i.e., the service foreground referred to in this embodiment) to an ENUM-DNS server on each slave node (i.e., the backup service foreground referred to in this embodiment), and the same operation is performed on the ENUM-DNS server of each slave node.

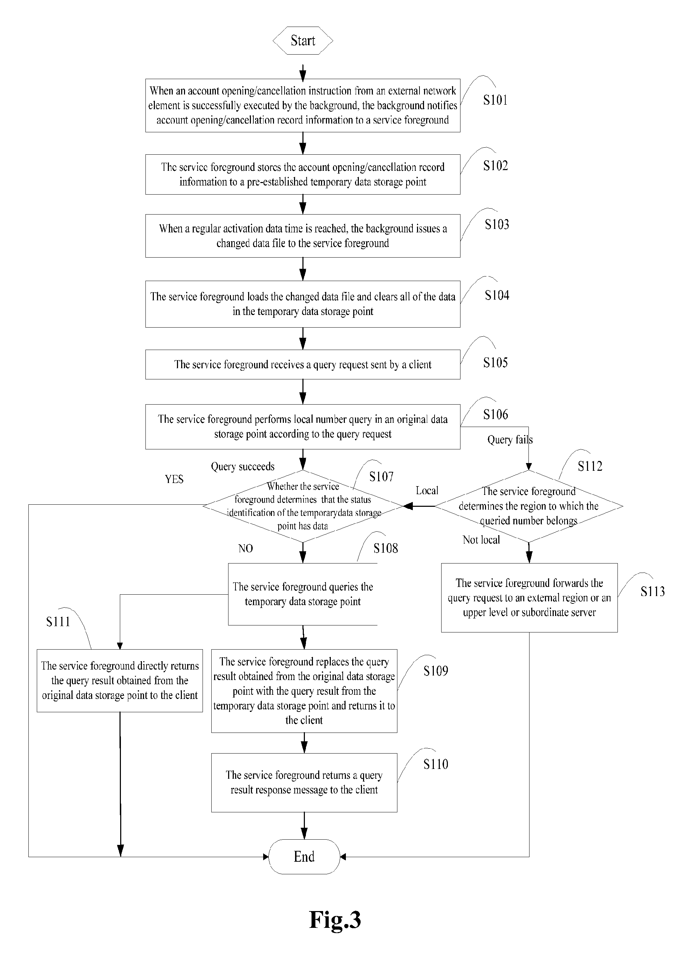

As shown in Fig.3, yet another embodiment of the present invention proposes a method for data synchronization between a foreground and a background in an ENUM-DNS, and based on the above-mentioned embodiment shown in Fig. 1, after the above-mentioned step S104, the method further includes:
step S105, the service foreground receives a query request sent by a client;
step S106, the service foreground performs local number query in an original data storage point according to the query request; if local number query is successful, step S107 is proceeded; otherwise, step S 112 is proceeded;
step S107, the service foreground determines whether the status identification of the temporary data storage point has data, and if yes, step S108 is proceeded; otherwise, step S110 is proceeded;
step S108, the service foreground queries the temporary data storage point; if the query is successful, step S109 is proceeded; otherwise, step S111 is proceeded; step S109, the service foreground replaces the query result obtained from the original data storage point with the query result from the temporary data storage point and returns it to the client; step S110 is proceeded; step S110, the service foreground returns a query result response message to the client.
Step S111, the service foreground directly returns the query result obtained from the original data storage point to the client, and step S 110 is proceeded.
Step S 112, the service foreground determines the region to which the queried number belongs; if the queried number is a local number, the flow goes back to step S107; otherwise, step S 113 is proceeded;
step S 113, the service foreground forwards the query request to an external region or an upper level or subordinate server.

This embodiment differs from the above-mentioned embodiment shown in Fig. 1 in that this embodiment further includes an operation of the client performing data query in the service foreground.

Specifically, when the service foreground performs data query, the client will send a query request to the service foreground, and after receiving the query request sent by the client, the service foreground firstly performs local number query in the original data storage point;

if it is determined that the number to be queried is not local data, this query request will be forwarded to an external region or an upper level ENUM-DNS server or a subordinate ENUM-DNS server, which has the same selection policy as the original system.

If the number to be queried belongs to the local region, the query flow of the original system is performed, and after a query result (result A) is obtained, if it is determined that the status identification bHaveData of the newly established temporary data storage point of the service foreground is 0, this query result will be directly returned to the client, and if the status identification bHaveData is 1, the query in the newly established temporary data storage point is continued, and if a result (result B) is obtained, result B is used to replace result A and is returned to the client. If no result is obtained in the newly established data storage point, result A will be returned to the client.

By means of the above-mentioned solution, this embodiment not only implements the real-time synchronization of foreground and background data and ensures the consistency of the foreground and background data, but also, when a foreground service receives data query, the service foreground queries the newly established temporary data storage point only when the query is local data query and the status identification bHaveData of the temporary data storage point is 1, and other parts of the service query flow remain unchanged, thereby further ensuring the stability of the system.

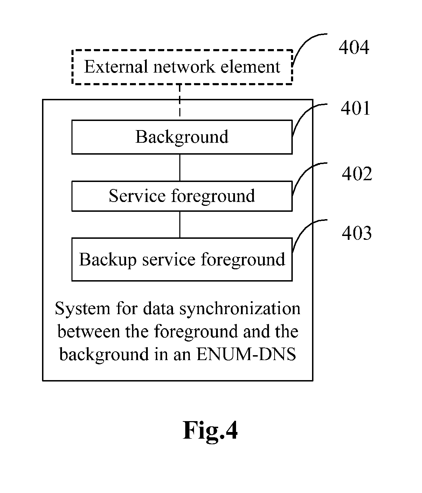

As shown in Fig.4, an embodiment of the present invention proposes a system for data synchronization between a foreground and a background in an ENUM-DNS, includes: a background 401, a service foreground 402 and a backup service foreground 403, wherein background 401 is connected to an external network element 404.

Background 401 is configured to notify account opening/cancellation record information to service foreground 402 when an account opening/cancellation instruction from external network element 404 is successfully executed; and issue a changed data file to service foreground 402 when a regular activation data time is reached.

Service foreground 402 is configured to store the account opening/cancellation record information to a pre-established temporary data storage point; and load the changed data file from background 401 and clear all of the data in the temporary data storage point.

In this embodiment, both service foreground 402 and backup service foreground 403 have established a new temporary data storage point in advance, for example, a table for storing data is established in the database and is configured to store data, and the new temporary data storage point is different from the original foreground service data storage point, thereby being able to protect the original data service from being affected.

Background 401 will regularly check if the temporary data storage point newly established by service foreground 402 is normal and set the status identification of the storage point, and if it is detected that service foreground 402 temporary data storage point is abnormal, background 401 notifies the user by way of error reporting and forbids the continual addition, deletion or modification of data in background 401 (such as replying the customer with an account opening or cancellation failure response, and displaying a foreground storage point anomaly alarm message in background 401).

External network element 404 of the ENUM-DNS system issues an account opening or cancellation instruction to background 401 of the ENUM-DNS system so that background 401 executes the account opening or cancellation instruction from external network element 404 and completes the account opening or cancellation operation.

If background 401 detects that the service foreground 402 data storage point is abnormal, background 401 does not execute the account opening or cancellation instruction and directly replies external network element 404 that the account opening or cancellation operation fails and ends this account opening or cancellation flow.

After background 401 executes the account opening or cancellation instruction, a corresponding success or failure response message is immediately fed back to external network element 404 no matter whether the execution result is success or failure. If background 401 fails to execute the account opening or cancellation instruction, this account opening or cancellation flow is ended.

After background 401 successfully executes the account opening or cancellation instruction, background 401 notifies the detailed record information about the execution of the account opening or cancellation instruction to a service computer of service foreground 402.

After receiving the detailed account opening or cancellation record information, service foreground 402 stores this information into the newly established temporary data storage point and performs the same operation in the newly established temporary data storage point. At the same time, service foreground 402 sets the identification bHaveData indicating whether or not the newly established temporary data storage point has data to 1;
when the regular activation data time is reached, background 401 generates a changed data file with a serial number with data changed within the regular activation data time granularity; and then issues this changed data file to service foreground 402 and sends a message notifying service foreground 402 to load this changed data file.

Within the same time granularity when the background 401 data is activated to the foreground, if a situation where a record indicates firstly account opening and then account cancellation or firstly account cancellation and then account opening occurs, background 401 cancels this record and does not synchronize this record to service foreground 402.

After receiving a message for loading the data file, service foreground 402 starts to load the above-mentioned changed data file, and if the loading succeeds, the service foreground clears the data in the newly established temporary data storage point, and sets the status identification bHaveData in the temporary data storage point to 0.

By means of the above-mentioned solution, this embodiment implements real-time effectiveness of foreground and background 401 data and ensures the consistency of the foreground and background 401 data under an existing mechanism; in addition, the need for frequent synchronization of data files from background 401 to a foreground service is obviated, and the need for frequent loading of the data files by the foreground service is obviated, therefore the performance of the system and the stability of the system are kept to the greatest extent from being affected.

In addition, the data related to the real-time effectiveness flow which is newly added is stored in the newly established temporary data storage point, and every time a data file is issued by background 401 to the foreground and the foreground successfully loads it, all of the data in the newly established temporary data storage point is cleared, thereby ensuring that if the real-time effective data is abnormal the system is able to automatically go back to normal after at most one data activation time granularity.

Further, service foreground 402 is also configured to synchronize the account opening/cancellation record information to backup service foreground 403; and synchronize the loaded changed data file to backup service foreground 403.

Backup service foreground 403 is configured to store the account opening/cancellation record information to a pre-established temporary data storage point; and load the changed data file synchronized from service foreground 402 and clear all of the data in the temporary data storage point.

Specifically, backup service foreground 403 also establishes a temporary data storage point of its own in advance, and let background 401 regularly check if the temporary data storage point is normal.

After service foreground 402 receives the detailed account opening or cancellation record information sent by background 401, service foreground 402 will notify backup service foreground 403 of this detailed record information about the execution of an account opening or cancellation instruction sent by background 401; and after receiving the detailed information about the account opening or cancellation instruction sent by service foreground 402, backup service foreground 403 stores these records in the newly established temporary data storage point.

Afterwards, when the regular activation data time of background 401 is reached, service foreground 402 loads the changed data file synchronized by background 401, and after the loading succeeds, clears the newly established temporary data storage point thereof, and meanwhile, service foreground 402 also synchronizes the changed data file to backup service foreground 403; and backup service foreground 403 loads the changed data file synchronized by service foreground 402, and after the loading succeeds, clears up the newly established temporary data storage point thereof, and meanwhile, sets the status identification bHaveData in the temporary data storage point to 0.

It can be known from the above-mentioned embodiment that all the operations against the newly established temporary data storage point in this embodiment are synchronized by an ENUM-DNS server on the master node (i.e., service foreground 402 referred to in this embodiment) to an ENUM-DNS server on each slave node (i.e., backup service foreground 403 referred to in this embodiment), and the same operation is performed on the ENUM-DNS server of each slave node.

Service foreground 402 is further configured to receive a query request sent by a client; perform local number query in an original data storage point according to the query request; query the temporary data storage point if local number query is successful and the status identification of the temporary data storage point has data; replace the query result obtained from the original data storage point with the query result from the temporary data storage point; and return a query result response message to the client.

Service foreground 402 is further configured to determine the region to which the queried number belongs if local number query is not successful; determine whether the status identification of the temporary data storage point has data if the queried number is a local number; otherwise, forward the query request to an external region or an upper level or subordinate server.

Specifically, when service foreground 402 performs data query, the client will send a query request to service foreground 402, and after receiving the query request sent by the client, service foreground 402 firstly performs local number query in the original data storage point;
if it is determined that the number to be queried is not local data, this query request will be forwarded to an external region or an upper level ENUM-DNS server or a subordinate ENUM-DNS server, which has the same selection policy as the original system.

If the number to be queried belongs to the local region, the query flow of the original system is performed, and after a query result (result A) is obtained, if it is determined that the status identification bHaveData of the newly established temporary data storage point of service foreground 402 is 0, this query result will be directly returned to the client, and if the status identification bHaveData is 1, the query in the newly established temporary data storage point is continued, and if a result (result B) is obtained, result B is used to replace result A and is returned to the client. If no result is obtained in the newly established data storage point, result A will be returned to the client.

By means of the above-mentioned solution, this embodiment not only implements the real-time synchronization of foreground and background data and ensures the consistency of the foreground and background 401 data, but also, when a foreground service receives data query, service foreground 402 queries the newly established temporary data storage point only when the query is local data query and the status identification bHaveData of the temporary data storage point is 1, and other parts of the service query flow remain unchanged, thereby further ensuring the stability of the system.

Compared with the prior art, the embodiments of the present invention have the following characteristics:
1. The original service flow remains unchanged.
   When the service foreground receives data query, a foreground service queries the newly established temporary data storage point only when the query is local data query and the identification bHaveData is 1, and other parts of the service query flow remain unchanged.
2. The performance of the system and the stability of the system are kept from being affected.
   The embodiments of the present invention implement real-time effectiveness of changed data in a foreground service, but the need for frequent synchronization of data files from the background to the service foreground is obviated, and the need for frequent loading of the data files by the service foreground is obviated; therefore, the performance of the system and the stability of the system are kept to the greatest extent from being affected.
3. The scope of influence of the problem is reduced to one data activation time granularity.

The original mechanism in the ENUM-DNS system can reliably ensure the consistency of foreground and background data and can ensure the consistency of the foreground and background data without changing the original mechanism. The data related to the real-time effectiveness flow which is newly added is stored in the newly established data storage point, and every time a data file is issued by the background to the service foreground and the service foreground successfully loads it, all of the data in the newly established temporary data storage point is cleared, thereby ensuring that if the real-time effective data is abnormal the system is able to automatically go back to normal after at most one data activation time granularity.

Any equivalent replacements of the structure or the flow based on the contents of the specification and drawings of the present invention, or direct or indirect application of the equivalent replacements in other related technical fields shall fall within the scope of protection of the present invention.

## Claims

1. A method for data synchronization between a foreground and a background in a Telephone Number Mapping working group-Domain Name System (ENUM-DNS), **characterized by** comprising:
when an account opening/cancellation instruction from an external network element is successfully executed by the background, the background notifying a service foreground of account opening/cancellation record information;
the service foreground storing the account opening/cancellation record information to a pre-established temporary data storage point;
when a regular activation data time is reached, the background issuing a changed data file to the service foreground; and
the service foreground loading the changed data file and clearing all of the data in the temporary data storage point.

2. The method according to claim 1, **characterized in that** the step of the background issuing a changed data file to the service foreground when a regular activation data time is reached comprises:
when the regular activation data time is reached, the background generating the changed data file with a serial number according to data changed within the regular activation data time granularity; and
the background issuing the changed data file to the service foreground.

3. The method according to claim 1, **characterized in that** after the step of the service foreground storing the account opening/cancellation record information to a pre-established temporary data storage point, the method further comprises:
the service foreground synchronizing the account opening/cancellation record information to a backup service foreground; and
the backup service foreground storing the account opening/cancellation record information to the pre-established temporary data storage point.

4. The method according to claim 1, **characterized in that** after the step of the service foreground loading the changed data file and clearing all of the data in the temporary data storage point, the method further comprises:
the service foreground synchronizing the changed data file to the backup service foreground; and
the backup service foreground loading the changed data file and clearing all of the data in the temporary data storage point of the backup service foreground.

5. The method according to claim 1, **characterized in that** before the step of notifying a service foreground of the account opening/cancellation record information when an account opening/cancellation instruction from the external network element is successfully executed by the background, the method further comprises:
the background receiving and executing the account opening/cancellation instruction from the external network element; and
the background returning an execution response message to the external network element.

6. The method according to any one of claims 1 to 5, **characterized in that** the method further comprises:
the service foreground receiving a query request sent by a client;
the service foreground performing local number query in an original data storage point according to the query request;
when local number query is successful, and the status identification of the temporary data storage point indicates there are data in the temporary data storage point, the service foreground querying the temporary data storage point;
the service foreground replacing the query result obtained from the original data storage point with the query result from the temporary data storage point; and
the service foreground returning a query result response message to the client.

7. The method according to claim 6, **characterized in that** after the step of performing local number query in an original data storage point according to the query request, the method further comprises:
when local number query is not successful, determining a region to which the queried number belongs;
when the queried number is a local number, determining that whether the status identification of the temporary data storage point indicates there are data in the temporary data storage point;
when the queried number is not a local number, forwarding the query request to an external region or an upper level or subordinate server.

8. The method according to claim 1, **characterized in that** before the step of notifying account opening/cancellation record information to a service foreground when an account opening/cancellation instruction from an external network element is successfully executed by the background, the method further comprises:
the service foreground establishing the temporary data storage point;
the background regularly checking the status of the temporary data storage point established by the service foreground and setting the status identification of the storage point; and
when the temporary data storage point of the service foreground is abnormal, the background feeding back a corresponding error reporting response message.

9. A system for data synchronization between a foreground and a background in a Telephone Number Mapping working group-Domain Name System (ENUM-DNS), **characterized by** comprising: a background and a service foreground, wherein:
the background is configured to notify account opening/cancellation record information to the service foreground when an account opening/cancellation instruction from an external network element is successfully executed; and issue a changed data file to the service foreground when a regular activation data time is reached; and
the service foreground is configured to store the account opening/cancellation record information to a pre-established temporary data storage point; and load the changed data file from the background and clear all of the data in the temporary data storage point.

10. The system according to claim 9, **characterized in that** the background is further configured to generate a changed data file with a serial number according to data changed within a regular activation data time granularity when the regular activation data time is reached; and issue the changed data file to the service foreground.

11. The system according to claim 9, **characterized in that** the system further comprises a backup service foreground;
the service foreground is further configured to synchronize the account opening/cancellation record information to the backup service foreground; and synchronize the loaded changed data file to the backup service foreground; and
the backup service foreground is configured to store the account opening/cancellation record information to a pre-established temporary data storage point; and load the changed data file synchronized from the service foreground and clear all of the data in the temporary data storage point thereof.

12. The system according to claim 9, **characterized in that** the background is further configured to receive and execute the account opening/cancellation instruction from the external network element; and return an execution response message to the external network element.

13. The system according to any one of claims 9 to 12, **characterized in that**
the service foreground is further configured to receive a query request sent by a client; perform local number query in an original data storage point according to the query request; query the temporary data storage point when local number query is successful and the status identification of the temporary data storage point indicates there are data in the temporary data storage point; replace the query result obtained from the original data storage point with the query result from the temporary data storage point; and return a query result response message to the client.

14. The system according to claim 13, **characterized in that**
the service foreground is further configured to determine the region to which the queried number belongs when local number query is not successful; and determine whether the status identification of the temporary data storage point indicate there are data in the temporary data storage point when the queried number is a local number; when the queried number is not a local number, forward the query request to an external region or an upper level or subordinate server.

15. The system according to claim 9, **characterized in that**
the service foreground is further configured to establish a temporary data storage point; and
the background is further configured to regularly check the status of the temporary data storage point established by the service foreground and set the status identification of the storage point; and feed back a corresponding error reporting response message when the temporary data storage point of the service foreground is abnormal.
